# EUROPEAN PATENT APPLICATION

(11) **EP 0 629 016 A1**
(43) Date of publication of application: **14.12.1994**
(21) Application number: 94300912.6
(22) Date of filing: 08.02.1994
(51) Int. Cl.: H01M 10/42, H01M 2/38

(54) **Vibration type bubble floating promotion means and device used during the process of battery charge/discharge**

(30) Priority: 27.05.1993 US 67964
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Arthur, Bryan Edward

(57) **Abstract**

Vibration type bubble floating promotion means and device relates to direct or indirect vibration applied against the housing of a battery to promote bubble floating speed in the electrolyte during the process of charge/discharge so as to minimize the rise of battery internal resistance.

## Description

### SUMMARY OF THE INVENTION

The conventional battery will appear temperature rising continuously because of internal resistance during the process of charge or discharge to result in the release of gas from the electrolyte form bubbles thereof. The existence of bubbles will reduce effective guiding are for electrolyte, result in increasing the current density passing under the same area to cause temperature rising and therefore to make the battery become worse in performance. The present vibration type bubble floating promotion means and device during the process of battery charge/discharge relates to direct vibration or indirect vibration against the housing to promote bubble floating speed in the electrolyte during the process of charge/discharge so as to minimize the rise of battery internal resistance due to excessive bubbles, the rise of temperature that results in forming much more bubbles and that again results in increasing internal resistance, i.e. to eliminate such an adversed cycle like this.

### BRIEF DESCRIPTION OF THE DRAWINGS

FIG. 1 is a diagramatic view showing the basic structure of the present vibration type bubble floating promotion means and device during the process of battery charge/discharge.

FIG. 2 is an embodiment showing a transducer mounted in the housing.

FIG. 3 is an embodiment showing the transducer mounted in the housing of battery is immersed in the electrolyte.

### DETAILED DESCRIPTION OF THE INVENTION

The basic structure of the present design is described as follows.

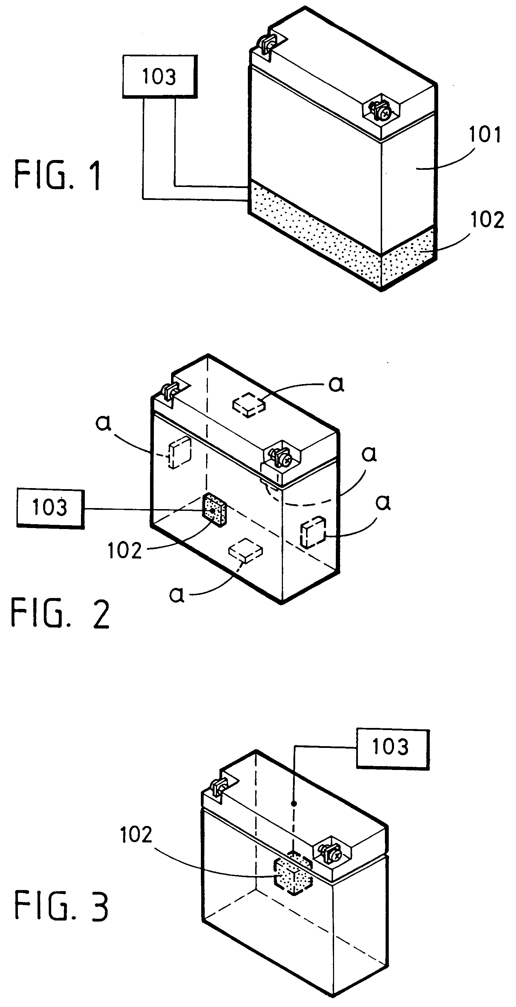

Referring to FIG. 1, a diagramatic view showing the basic structure of the present vibration type bubble floating promotion means and device during the process of battery charge/discharge wherein the main structure comprising:
a battery 101: an acid or alkaline battery containing electrolyte;
a vibration base: a moving up/down or right-handed/left-handed or synthetical vibration structure driven by transducer 102 by means of solenoid or magnetic hystersis telescoping or other mechanical transformation or displacement with electric energy, and he battery is loaded thereon;
a vibration power supply unit 103: to provide electric energy input subject to the necessary frequency and voltage current value for the transducer 102; the vibration power supply unit may be independent or integrally mounted on the housing together with the vibration base and transducer.

The transducer of the vibration base is excited by electric energy produced by the vibration power supply unit for vibrating while gearing the battery on the base to produce vibration so as to help speed up the escape of bubbles produced during battery charge or discharge in order to minimize heat produced.

Except for the separative structure shown in FIG. 1, we may mount the transducer directly on the battery housing (incl. top, bottom or sidewise), or within the housing and immersed in the electrolyte so as to accept vibration from the transducer in order to shorten the time of bubbles escape.

Referring to FIG. 2, an embodiment showing a transducer mounted in the housing wherein position a along the dotted line is available for mounting the transducer 102 while the vibration power supply unit 103 may be integrally or independently mounted.

Referring to FIG. 3, an embodiment showing the transducer mounted in the housing of battery is immersed in the electrolyte wherein the transducer 102 is mounted immersing in the electrolyte while the vibration power supply unit 103 may be independently mounted or mounted in the battery housing or integrally combined with the transducer and immersed in the electrolyte within the housing.

Referring to aforesaid embodiments, the transducer may be one or more sets mounted for each battery, and the frequency of vibration can be selected at random, however the frequency beyond human audial sense is preferred as to reduce noise pollution.

## Claims

1. A vibration type bubble floating promotion means and device during the process of battery charge/discharge relates to direct vibration or indirect vibration against the housing to promote bubble floating speed in the electrolyte during the process of charge/discharge so as to minimize the rise of battery internal resistance due to excessive bubbles, the rise of temperature that results in forming much more bubbles and that again results in increasing internal resistance, i.e. to eliminate such an adversed cycle like this.

2. The vibration type bubble floating promotion means and device during the process of battery charge/discharge according to claim 1 wherein the main structure comprising:
a battery 101: an acid or alkaline battery containing electrolyte;
a vibration base: a moving up/down or right-handed/left-handed or synthetical vibration structure driven by transducer 102 by means of solenoid or magnetic hystersis telescoping or other mechanical transformation or displacement with electric energy, and he battery is loaded thereon;
a vibration power supply unit 103: to provide electric energy input subject to the necessary frequency and voltage current value for the transducer 102; the vibration power supply unit may be independent or integrally mounted on the housing together with the vibration base and transducer.

3. The vibration type bubble floating promotion means and device during the process of battery charge/discharge according to claim 1 wherein the transducer may be directly mounted on the battery housing (incl. top, bottom or sidewise), or within the housing and immersed in the electrolyte so as to accept vibration from the transducer in order to shorten the time of bubbles escape.

4. The vibration type bubble floating promotion means and device during the process of battery charge/discharge according to claim 1 wherein the transducer may be one or more sets mounted for each battery, and the frequency of vibration can be selected at random, however the frequency beyond human audial sense is preferred as to reduce noise pollution.
